# EUROPEAN PATENT SPECIFICATION

(11) **EP 2 199 950 B1**
(45) Date of publication and mention of the grant of the patent: **20.07.2016**
(21) Application number: 09179133.5
(22) Date of filing: 14.12.2009
(51) Int. Cl.: B42B 2/02, B42C 1/12, G06K 9/20

(54) **Recognition of articles based on combination of codes and images**
Erkennung von Artikeln auf der Basis einer Kombination aus Codes und Bildern
Reconnaissance d'articles à base d'une combinaison de codes et d'images

(30) Priority: 15.12.2008 IT MI20082218
(43) Date of publication of application: 23.06.2010
(73) Proprietor: MECCANOTECNICA S.p.A., I-24025 Gazzaniga - Bergamo (IT)
(72) Inventor: Cordella, Alfredo, 24125 BERGAMO (IT); Boccalari, Davide, 24060 TORRE DE' ROVERI (BG) (IT)
(74) Representative: Pezzoli, Ennio

(56) References cited:
- EP-A2- 1 715 441
- WO-A1-96/32692
- WO-A1-98/48373
- US-A1- 2004 108 382

## Description

The solution according to an embodiment of the present invention relates to the image processing field. More specifically, this solution relates to the recognition of articles to be processed.

The recognition of articles of different type plays a very important role in their processing. For example, in the bookbinding field a typical application regards the recognition of signatures. Generally, the signatures are sewn together in blocks each one compliant with a sequence that defines corresponding books (by means of sewing machines). In such context, it is of the utmost importance to control that the signatures are actually processed according to the desired sequence (in order to promptly detect any sequencing error that would cause the production of defective books).

Some solutions are available to facilitate the control of the processing sequence of the signatures according to their automatic recognition (both during a learning phase for defining the sequence of a specific job and during a verification phase of the signatures to be processed). Particularly, the verification of each current signature to be processed involves its comparison with the signature of the sequence that is expected at that moment; whenever a difference between the current signature and the expected signature is found, the sewing machine is stopped to allow an operator to restore the correct processing sequence of the signatures.

A known technique for the recognition of the signatures is based on specific codes (for example, bar codes), which are printed on the signatures in external scrap areas intended to be cut after the sewing; in such recognition technique, the code being read on each current signature is compared with the code of the expected signature. However, the scrap areas are very narrow (in order to reduce the amount of wasted paper); this requires the use of bar codes of small size and their printing close to the edges of the signatures. Therefore, even slight printing errors, irregularities of the edges of the signatures, or deformations of the signatures can corrupt the bar codes (thereby making them illegible). In this condition, it is then not possible to establish whether the missing reading of the bar code of any current signature is due to its actual absence (for example, in the very common case wherein the current signature is loaded the wrong way round in the sewing machine) or to a simple corruption thereof. This involves the risk of having useless stops of the sewing machine (with consequent loss of productivity). In order to avoid this problem, it is therefore common practice to wait for the missing reading of the bar codes in more consecutive current signatures (for example, 2-3) before stopping the sewing machine; however, this consequently reduces the robustness of the control of the processing sequence of the signatures.

Another known technique for the recognition of the signatures is instead based on the processing of digital images; in this recognition technique, an image representing each current signature (for example, being acquired by means of a camera) is compared with an image of the expected signature. However, the image recognition technique is intrinsically less accurate than the bar code recognition technique is (because of the fact that the images to be recognized are indeterminate *a priori*). Moreover, the comparison of the images requires very complex calculations; particularly, a very heavy operation is the panning for searching the best overlap between the two images to be compared (based on a cycle that continually translates and/or rotates an image with respect to the other).

Document IT-A-MI20010754 also proposes a signature recognition system with two independent modules being capable of implementing the bar code recognition technique and the image recognition technique alternatively. Particularly, if the signatures are provided with bar codes, the system applies the corresponding recognition technique; on the contrary, the system automatically switches to the image recognition technique. However, such recognition system suffers from the same drawbacks pointed out above in each one of the two operating modes that is selected at the moment.

Document US-A-2004/108382 instead discloses a technique for determíning the orientation of documents; particularly, a bar code of each document is searched in multiple scan areas of the image thereof, so as to determine the orientation of the document according to the specific scan area wherein the bar code is found.

Moreover, document WO-A-98/48373 discloses an OCR assisted method for decoding bar codes. For this purpose, an associated text is read when the bare code is corrupted; each character of the bar code being corrupted is then replaced with the corresponding character of the text.

In its general terms, the solution according to an embodiment of the present invention is based on the idea of integrating different recognition techniques.

Particularly, different aspects of the solution according to an embodiment of the invention are set out in the independent claims, with advantageous features of the same solution that are set out in the dependent claims (which wording is herein incorporated *verbatim* by reference).

More specifically, an aspect of the solution according to an embodiment of the invention proposes a method for recognising articles to be processed (for example, signatures). The method starts with the step of storing an indication of an expected set of repetitive processing of the articles (for example, an expected processing sequence of the signatures in a sewing machine being created automatically during a learning phase); each article of the expected set is defined by a code compliant with a predefined coding (for example, a bar code), an offset from a representation of the code on the article, and a representation of a frame of predefined size representing a portion of the article at said offset from the representation of the code. The method then provides for repeating the following steps for each current article to be processed, corresponding to an expected article of the expected set (being defined by an expected code, an expected offset, and an expected frame). First of all, there is acquired a current image representing at least part of the current article. The representation of a current code being compliant with this coding is searched in the current image (for example, by scanning a search area thereof with a search line); a position in the current image of the representation of a corrupted code partially compliant with the coding (for example, being incomplete) is determined in response to a negative result of the search of the current code. In this case, a current frame of said size is extracted from the current image at the expected offset from the position of the representation of the corrupted code. The current frame is compared with the expected frame; a correctness of the article is determined according to the comparison of the current frame with the expected frame (for example, by detecting a sequencing error when the two frames do not match).

A different aspect of the solution according to an embodiment of the invention proposes a corresponding computer program. Particularly, the computer program includes code means for causing a data processing system (for example, a control system of the sewing machine) to perform the steps of the method when the computer program is executed on the system.

Another aspect of the solution according to an embodiment of the invention proposes a system for implementing the method. Particularly, there is proposed a control system for recognising articles to be processed, the control system including means for storing an indication of an expected set of repetitive processing of the articles, each article of the expected set being defined by a code compliant with a predefined coding, an offset from a representation of the code on the article, and a frame of predefined size representing a portion of the article at said offset from the representation of the code, means for acquiring a current image representing at least part of a current article to be processed corresponding to an expected article of the expected set being defined by an expected code, an expected offset, and an expected frame, means for searching the representation of a current code being compliant with this coding in the current image, means for determining a position in the current image of the representation of a corrupted code partially compliant with the coding in response to a negative result of the search of the current code, means for extracting a current frame of said size from the current image at the expected offset from the position of the representation of the corrupted code, means for comparing the current frame with the expected frame, and means for determining a correctness of the article according to the comparison of the current frame with the expected frame.

A further aspect of the solution according to an embodiment of the invention proposes a machine for processing generic articles (for example, signatures in a sewing machine), which machine includes this control system.

The solution according to one or more embodiments of the invention, as well as further features and the advantages thereof, will be best understood with reference to the following detailed description, given purely by way of a non-restrictive indication, to be read in conjunction with the accompanying drawings. In this respect, it is expressly intended that the figures are not necessary drawn to scale and that, unless otherwise indicated, they are merely used to conceptually illustrate the structures and procedures described herein. Particularly:
FIG.1 is an illustrative representation of a bookbinding sewing machine in which the solution according to an embodiment of the invention can be applied,
FIG.2 illustrates an exemplary signature that may be used to apply the solution according to an embodiment of the invention,
FIG.3A-3C show the various phases of a process implementing the solution according to an embodiment of the invention,
FIG.4A-4C show additional phases of a process implementing the solution according to an embodiment of the invention,
FIG.5 illustrates the main software components that can be used to implement the solution according to an embodiment of the invention, and
FIG.6A-6C is a diagram describing the flow of activity relating to an implementation of the solution according to an embodiment of the invention.

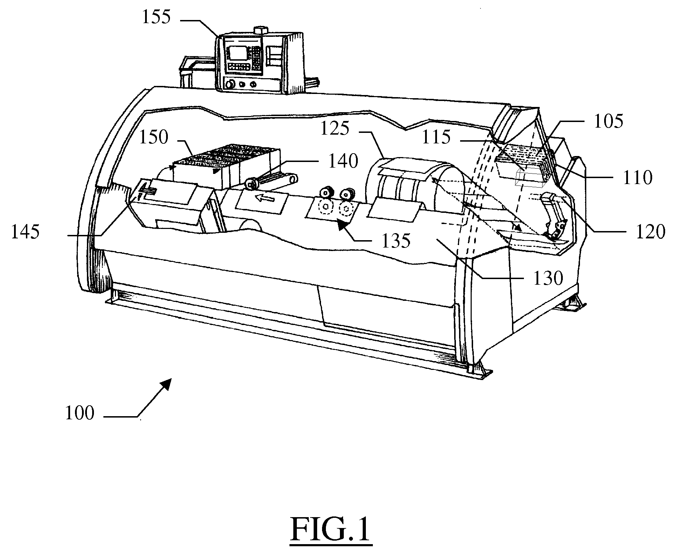

With reference in particular to FIG.1, there is shown an illustrative representation of a bookbinding sewing machine 100 in which the solution according to an embodiment of the invention can be applied. The sewing machine 100 is used to sew signatures 105 together in blocks (for example, of 5-50 signatures) corresponding to the books to be produced. The signatures 105 are processed in the sewing machine 100 according to an expected sequence that is repeated continually; the expected sequence is defined by the signatures that form the blocks in the correct order.

The signatures 105 are loaded into a hopper 110 (turned downwards). A control system 115 (for example, based on a microprocessor) is used to recognize the signatures 105 that are extracted in succession from the bottom of the hopper 110, in order to control their processing sequence (as described in detail in the following). Particularly, the signatures 105 are extracted from the hopper 105 by means of pliers 120, which feed them to an opening station 125. The signatures 105 are opened in the middle and placed astride a fixed saddle 130. The fixed saddle 130 is provided with a longitudinal slit for a belt with pushing pegs (not shown in the figure), which belt conveys the signatures 105 through a shaping station 135. A throwing wheel 140 then accelerates the signatures 105, so as to separate them from the preceding ones and place them individually onto a movable saddle 145 (in an open position being aligned with the fixed saddle 130). The movable saddle 145 is then closed (by raising it), and the signature 105 at the moment being loaded on the movable saddle 145 is sewn to a previous signature of the same block by means of continuous threads (which are cut at the end of each block). The blocks so obtained (denoted with the reference 150) are then placed onto a belt, which supplies them to further machines (not shown in the figure) that complete the production of the corresponding books. Operation of the sewing machine 100 is managed by a programmable logic controller (PLC) 155.

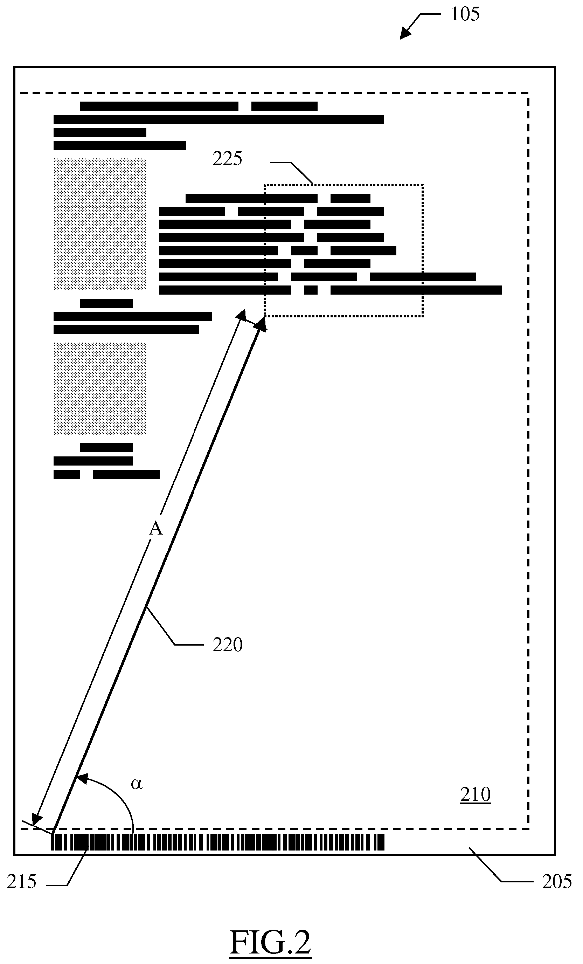

An exemplary signature 105 that may be used to apply the solution according to an embodiment of the invention is shown in FIG.2. The signature 105 consists of a large printed sheet that is folded one or more times, so as to form several layers (each one for a page of the corresponding book) - for example, with a size of 100-300mm x 100-300mm; a last folding of the signature 105 defines a back, whereas an edge opposite the back defines a lip; the back is connected to the lip by means of a head (from which the reading starts) and a foot (opposite the head). Particularly, in the figure the signature 105 is turned upwards so as to show a front page thereof.

The signature 105 includes an external scrap area 205, which is intended to be cut after the sewing (so as to allow opening the pages of the book); generally, the scrap area 205 consists of a strip with a thickness of some millimetres (for example, 2-12 mm), which follows the head, the lip and the foot of the signature 105. The remaining part of the signature 105 defines a working area 210 on which the desired information (i.e., text and/or drawings) can be printed. The information is printed on each page by leaving, however, an external blank margin (for example, of at least 5 mm), typically starting from the top and from the left (close to the head and to the back of the signature 105, respectively).

In the scrap area of the front page of the signature 105 (for example, close to the foot) there is also printed a bar core 215 (which is instead absent in the other pages of the signature 105) - for example, with a size of 15-30mm x 1-3mm. Generally, the bar code 215 consists of a series of parallel lines having variable width and spacing, which lines represent a corresponding code according to a predefined coding (for example, compliant with the 2/5 Interleaved standard). The coding is defined by rules that specify the representation of each symbol (for example, letters and numbers); normally, the coding also defines a special initial symbol (start marker), a special final symbol (stop marker), and a control value (checksum). The coding may be based on lines and spaces with two or more widths; the symbols may then be represented in a continuous way (i.e., each symbol begins with a line and ends with a space, or *vice-versa*) or in a discrete way (i.e., each symbol begins and ends with a line, with any intermediate space that is disregarded). In order to increase its reliability, the coding may also be of the interleaved type; in this case, the symbols are defined in pairs (at a predefined distance between them), with the first symbol of the pair that is represented by varying the width of the lines (with uniform spaces) and the second symbol of the pair that is represented by varying the spaces between these lines - or *vice-versa.* In the specific case, the bar code 215 represents the code that identifies the type of signature 105 - for example, through a Unique Identifying Number, or UID.

In order to control the processing sequence of the signatures, each signature of the expected sequence is identified as usual by the corresponding code; with reference to the same signature 105 being shown in the figure, such code is represented on the signature 105 by the bar code 215 that is printed on its front page. In the solution according to an embodiment of the present invention (as described in detail in the following), each signature of the expected sequence is also identified by an offset 220 and a frame 225. The offset 220 represents a displacement from the bar code 205, which is defined by a vector having a modulus A (for example, starting from a left upper corner of the bar code 205) and an angle α (for example, with respect to a longitudinal axis of the bar code 215). The frame 225 instead represents a portion of the front page of the signature 105 with a smaller size (for example, with sides being equal to 5-20%, preferably 7-15%, such as 10% of corresponding sides of the signature 105 - for example, 10-30mm x 10-30mm), which frame is arranged at a position being defined by the offset 220 with respect to the bar code 215 (for example, with the vector of the offset 220 that points to the left lower corner of the frame 225).

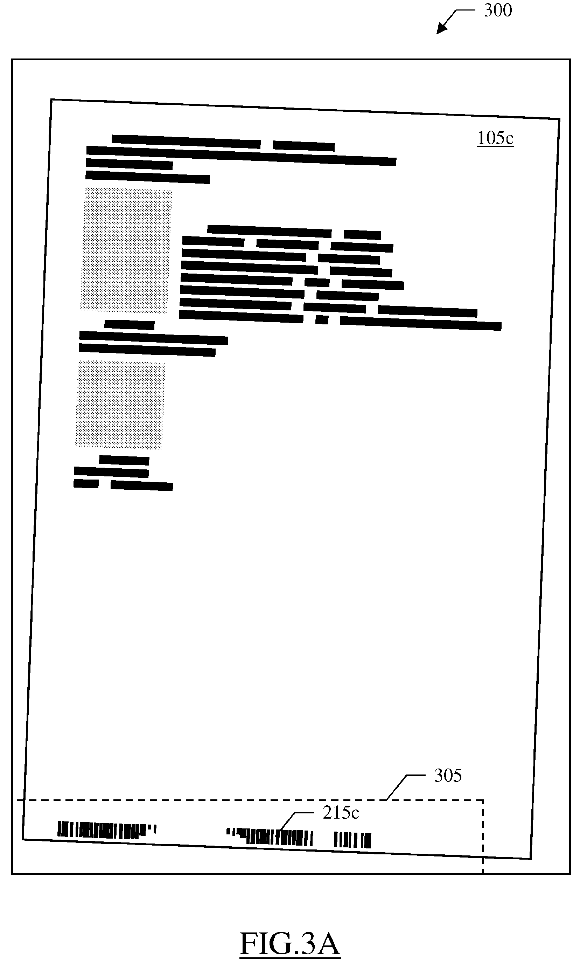

The various phases of a process implementing the solution according to an embodiment of the invention are shown in FIG.3A-3C. This control process requires that each current signature to be processed should be compared with a signature that is expected at the moment in the sequence, in order to verify whether the current signature corresponds to the expected signature correctly.

Starting from FIG.3A, a digital image 300 that represents the current signature (denoted with 105c) is acquired - in the following, the different elements and their representations will be denoted with the same names and references for the sake of description simplicity. The image 300 is defined by a bitmap being formed by a matrix of values for respective pixels; typically, each pixel value consists of a grey level (for example, coded on 8 bits) that represents the brightness of the pixel - from 0 (black) to 255 (white). The image 300 has a size including a prevalent portion of the current signature 105c (for example, for an area of 200-240mm x 200-240mm); the image 300 is acquired so as to guarantee the desired representation of the current signature 105c independently of possible movements thereof (magnified in the figure), being caused by the fact that in practice it is not possible to guarantee that the signatures always appear in the same position. The image 300 is then processed to search the bar code of the current signature 105c (denoted with 215c). Such operation is executed in a search area 305, which consists of a portion of the image 300 wherein the bar code 215c is expected to be found (for example, a rectangle of 60-80mm x 20-40mm starting from a left lower edge of the image 300).

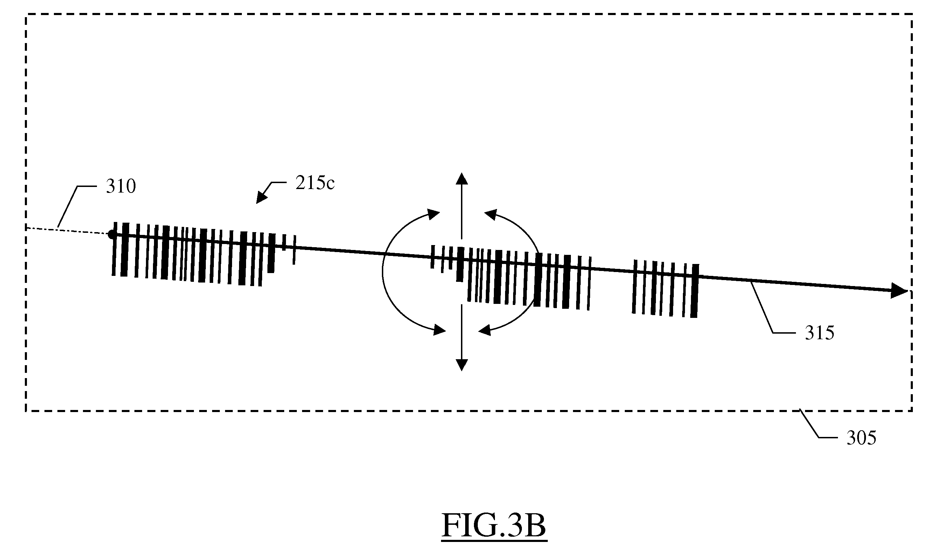

As shown in the enlarged view of the search area 305 of FIG.3B, for this purpose a search line 310 is drawn. The search line 310 is modified continually (by translating and/or rotating it) so as to scan the whole search area 305. Each current version of the search line 310 is analysed to determine whether it intercepts a bar code.

The search operation ends as soon as a bar code being valid is found, or after the expiring of a time-out. As usual, in the first case the code so read is compared with the code of the expected signature to verify whether the current signature corresponds to the expected signature. On the contrary, instead, it is not possible to associate any code with the current signature; this happens when the current signature does not include the bar code (for example, because loaded the wrong way round in the hopper of the sewing machine), or when the bar code is corrupted (for example, because of printing problems, irregularities of the edges of the current signature, or deformations thereof).

In the solution according to an embodiment of the present invention, in this case the above-described search operation in any case returns an indication of the position of a possible corrupted bar code that is found in the search area 305 (in response to the reading of a corresponding non-valid code). Particularly, as shown in the figure, the bar code 215c may be corrupted because it is not complete (for example, it only includes the initial symbol being followed by some other symbols); in addition or in alternative, the bar code (even if complete) may be corrupted because it has a wrong control value. The position of the (corrupted) bar code 215c is determined by the specific search line 310 that intercepts it (as shown in the figure). Particularly, the position of the bar code 215c is defined by a reference 315; the reference 315 consists of a half-line that extends from an origin of the bar code 215c on the search line 310, in the direction of the bar code 215c along it. It should be noted that the reference 315 can be considered substantially parallel to a longitudinal axis of the bar code 215c; in fact, the conformation of the bar code 215c (very long and narrow) guarantees that its reading degrades significantly along the search lines 310 that are even only slightly tilted with respect to its longitudinal axis.

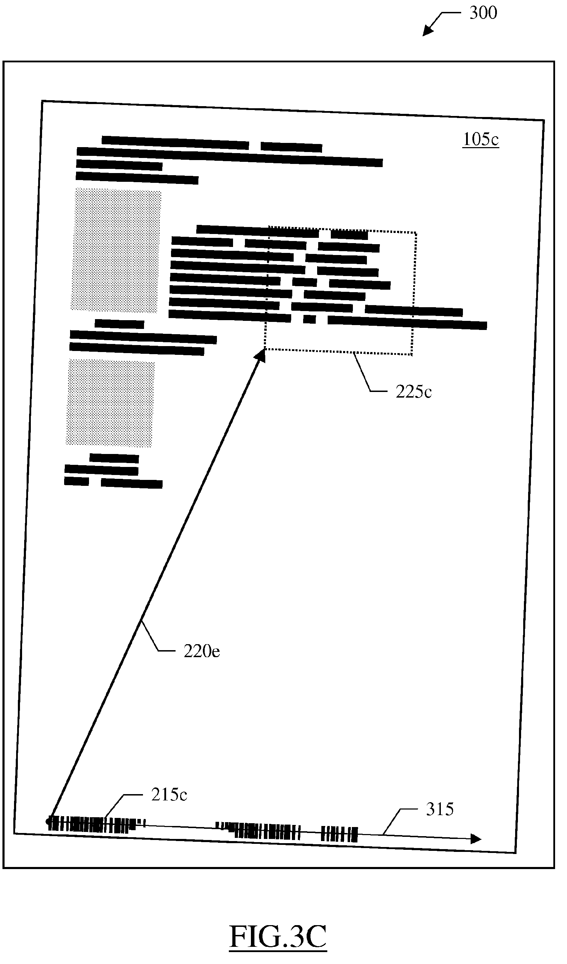

Passing to the overall view of FIG.3C, a frame 225c having the same size of the frame of the expected signature is extracted from the image 300; the frame 225c is arranged at a position being defined by the offset of the expected signature (denoted with 220e) with respect to the reference 315 of the bar code 215c. Particularly, the vector of the offset 220e (that extends for the corresponding modulus from the origin of the reference 315, at the corresponding angle from the direction of the reference 315) points to the left lower corner of the frame 225c; the frame 225c is arranged with its lower side parallel to the reference 315. The frame 225c is then compared with the frame of the expected signature to verify whether the current signature 105c corresponds to the expected signature.

The proposed solution allows verifying the correctness of the signatures also when their bar codes are corrupted. This remarkably increases the robustness of the control of the processing sequence of the signatures. Particularly, in case the bar code of the current signature is corrupted, if its frame does not match the frame of the expected signature as well it is possible to establish that the current signature is wrong with a high degree of confidence (and then to stop the sewing machine immediately).

The desired result is obtained with a limited additional processing, which is substantially irrelevant for the performance of the whole control process of the processing sequence of the signatures. Particularly, the determination of the position of the corrupted bar code may be carried out in the course of the search operation (by simply recording its reference when necessary). Moreover, the comparison between the frame of the current signature and the frame of the expected signature is very simple. In fact, such frames have reduced size (with respect to the whole images of the signatures). Moreover, since the position of the frame in the image that represents the current signature is defined by using the bar code as a reference, such frame is already substantially aligned with the frame of the expected signature (independently of any movement of the current signature); therefore, in the course of the comparison between the frame of the current signature and the frame of the expected signature it is possible to avoid (or in any case reduce to the minimum) a panning operation (very heavy) for searching their best overlapping.

For example, in case the control system implements a recognition of the signatures being based on both the bar code recognition technique and the image recognition technique, the processing time of each current signature is defined by the (more complex) image recognition technique - for example, 100-300ms. On the contrary, the (simpler) bar code recognition technique requires a far lower processing time - for example, 10-30ms; therefore, in such case the remaining processing time (i.e., 90-270ms) is more than enough to implement the additional comparison operation being required by the proposed solution (since it is far shorter than the one of the processing time of the standard recognition technique for the reasons pointed out above).

Particularly, in the above-described implementation the direction of the reference 315 substantially corresponds to the direction of the longitudinal axis of the bar code 215c. However, the reference 315 can be at any elevation within the bar code 215c (from the top to the bottom), so that it does not represent its elevation exactly with respect to the foot of the current signature 105c. However, this is not a problem in practice, since the corresponding error of position of the frame 225c with respect to the frame of the expected signature only consists of a displacement upwards or downwards, which is easily corrected by a fast panning operation during their comparison (being limited to a translation only in the vertical direction, without requiring any translation in the horizontal direction nor any rotation).

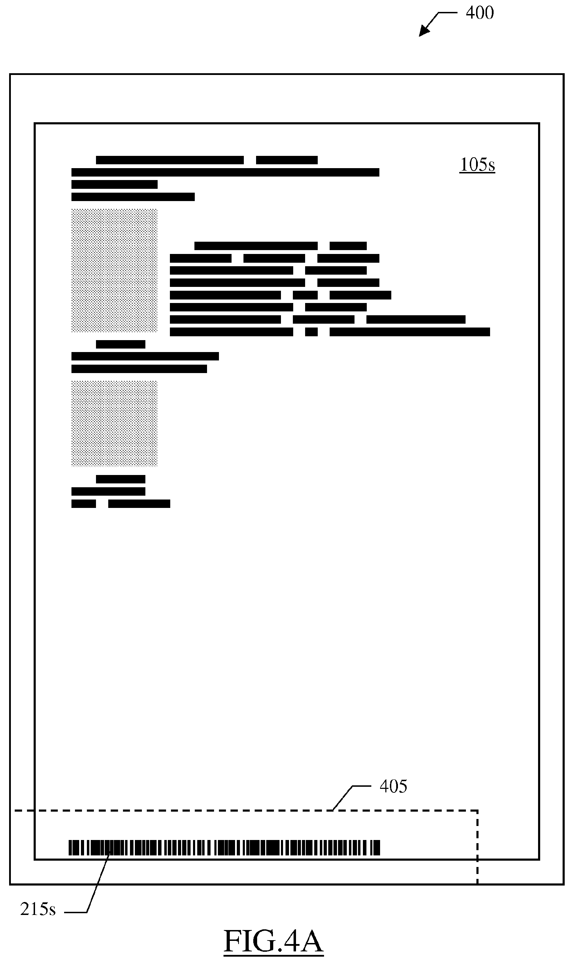

Typically, each expected sequence is defined during a learning phase that precedes the actual execution of the corresponding job on the sewing machine. The various operations of the learning phase in the solution according to an embodiment of the invention are illustrated in FIG.4A-4C. Such learning phase requires the processing of sample signatures corresponding to the expected sequence in succession; particularly, the definition (i.e., code, offset and frame) of each signature to be learnt of the expected sequence is obtained from the corresponding sample signature.

Starting from FIG.4A, a digital image 400 that represents a sample signature (denoted with 105s) is acquired. As above, the image 400 is processed to search the bar code of the sample signature 105s (denoted with 215s) within an analogous search area 405.

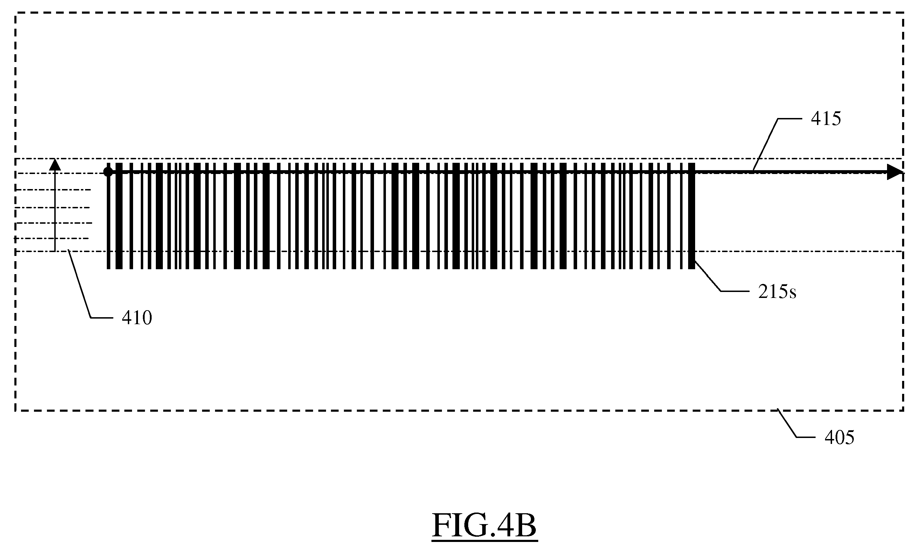

As shown in the enlarged view of the search area 405 in FIG.4B, the (valid) bar code 215s is read as soon as it is intercepted by a search line (denoted with the reference 410) that it is modified continually to scan the whole search area 405. The code so read is assigned to the signature to be learnt. The search line 410 is then translated inwards the sample signature (i.e., upwards) by predefined steps, until it does not intercept the bar code 215s any longer. When this happens, the preceding position of the search line 410 is used to define the position of the bar code 215s. As above, the position of the bar code 215s is defined by a reference 415, which consists of a half-line extending along such search line 410 in the direction of the bar code 215s from an origin corresponding to the beginning of the bar code 215s thereon.

The above-described searching technique is not excessively complex, since the analysis of the search line 410 for controlling whether it still intercepts the bar code 215s is only executed at discreet steps. However, this ensures a remarkable precision (as the position of the bar code 215s is determined with an error being lower than the translation step, which is easily compensated by the panning operation that is executed during the comparison of the frames).

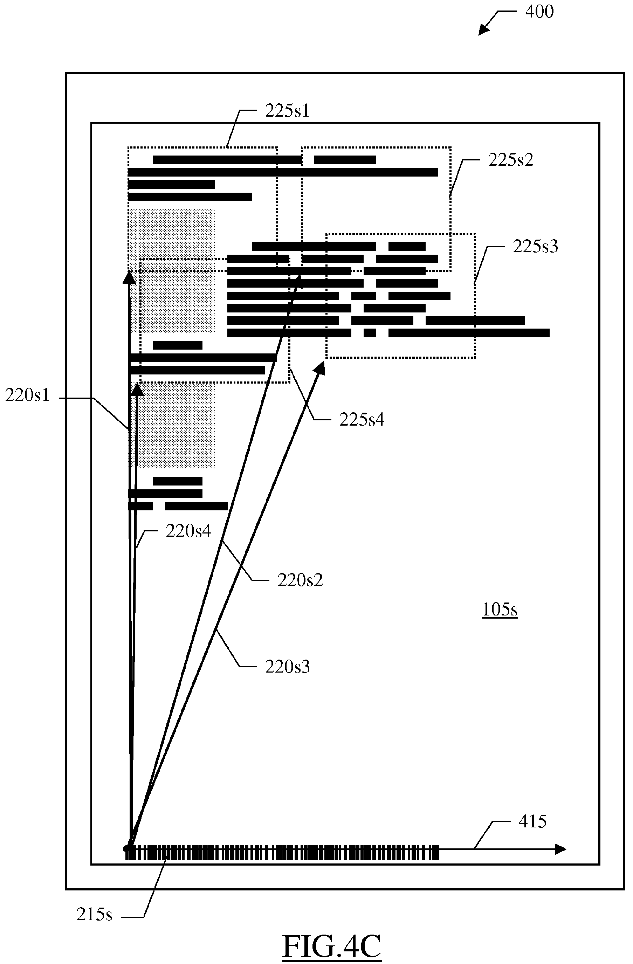

Passing to the overall view of FIG.4C, different (eligible) offsets 220s1, 220s2, 220s3 and 220s4 with respect to the bar code 215s (four in the example at issue) are represented in the figure by corresponding vectors that start from the origin of the reference 415. Corresponding (eligible) frames 225s1, 225s2, 225s3 and 225s4 are extracted from the image 400; all the frames 225s1, 225s2, 225s3 and 225s4 have the same size, and they are arranged at positions being defined by the offsets 220s1, 220s2, 220s3 and 220s4, respectively; as above, this means that the vector of each offset 220s1-220s4 starts from the origin of the reference 415 for pointing to the left lower corner of the corresponding frame 225s1-225s4, with the frame 225s1-225s4 that is arranged so as to have its lower side that is parallel to the reference 415. The offsets 220s1-220s4 are predetermined so as to guarantee that the frames 225s1-225s4 (for example, arranged at the top and at the left of the current signature 105s) include information being relevant for its identification in the most practical situations.

The frames 225s1-225s4 are then compared to each other to select the one that is more indicated to characterize the sample signature 105s (for example, having the highest informative content). The selected frame - for example, the frame 225s3 - and the corresponding offset 220s3 are assigned to the signature to be learnt. In such way, it is possible to associate, to each signature of the expected sequence, a frame that it is highly characterizing of it in the most practical applications.

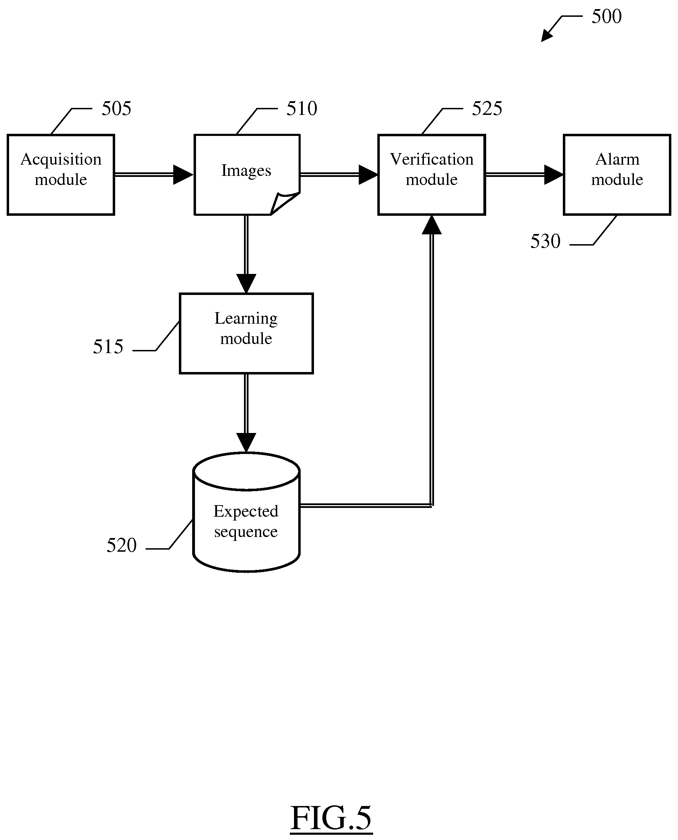

The main software components that can be used to implement the solution according to an embodiment of the invention are illustrated in FIG.5. These software components are denoted as a whole with the reference 500. The information (programs and data) is typically stored on a mass memory of the microprocessor of the control system and it is loaded (at least partially) into a working memory thereof when the programs are running.

Particularly, an acquisition module 505 drives a camera (for example, of the CCD type) that it is used to acquire digital images of the front pages of the signatures that are extracted from the hopper of the sewing machine; particularly, the acquisition module 505 controls various operative parameters of the camera (like the exposure and the lighting intensity), and it applies a series of filters to the images (for example, a white-balance algorithm, an exposure correction, and the like) to improve their quality. Each acquired image is stored into a correspondent file 510 (by replacing the preceding one).

During a learning phase (which precedes the execution of each new job), the file 510 is used by a learning module 515. The image stored in the file 510 (representing a sample signature corresponding to a signature to be learnt for defining the expected sequence of the new job) is processed by the learning module 515 to determine its definition (i.e., code, offset and frame). Such definition is inserted into a new record of a table 520; in this way, at the end of the learning phase (when all the sample signatures corresponding to the expected sequence have been processed), the table 520 will contain the definitions of all the signatures of the expected sequence in the correct order.

When the job is actually executed, instead, the file 510 is used by a verification module 525. The image being stored in the file 510 (representing now a current signature to be processed) is processed by the verification module 525 to determine whether it corresponds to the signature being expected at the moment; for this purpose, the verification module accesses the definition of the expected signature in the table 520 (by means of an index - being supplied by the PLC - that points to the record of the expected signature).

In case of error (i.e., when the code being read in the current signature is different from the code of the expected signature, when the current signature has a corrupted bar code and the frame being extracted therefrom at the offset of the expected signature does not match its frame, or when the current signature does not include any bar code), the verification module 525 actuates an alarm module 530. The alarm module 530 commands the PLC to stop the sewing machine and to output a corresponding error signal (for example, of the acoustic type).

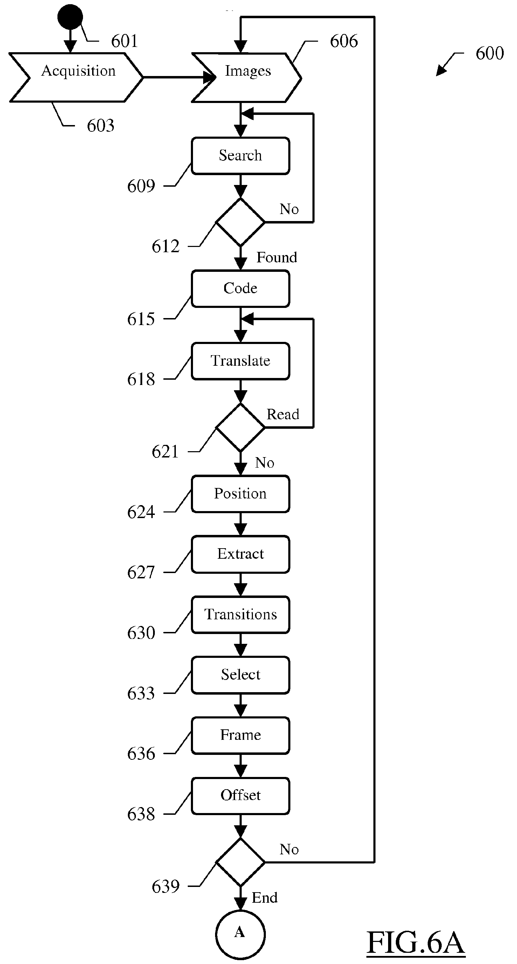

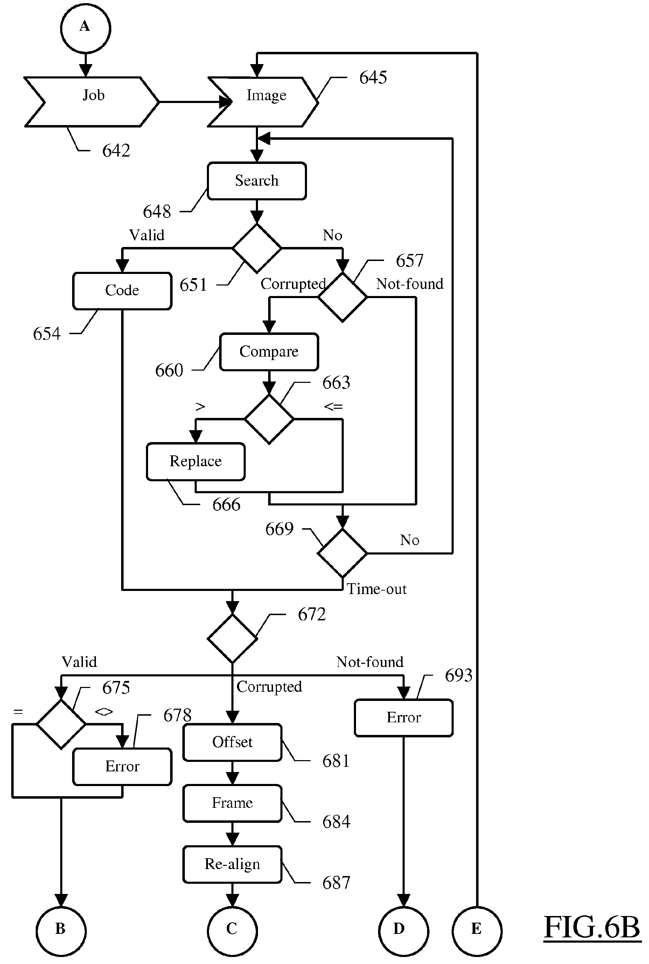

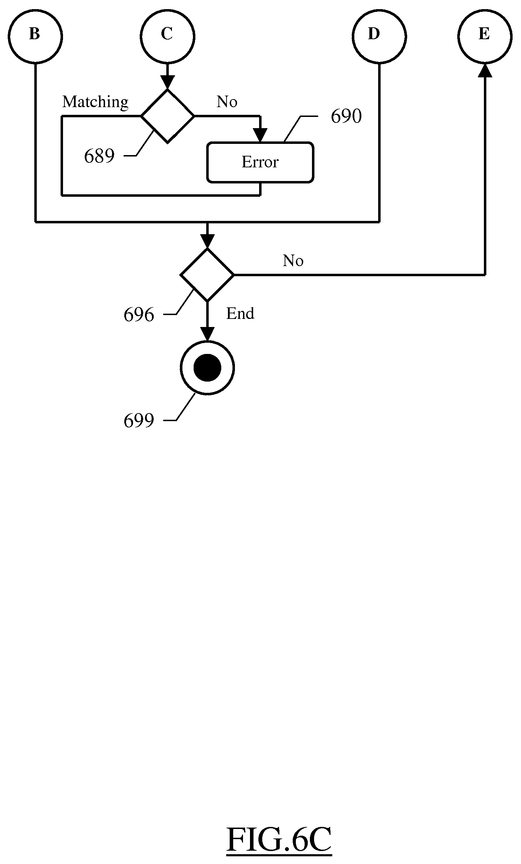

With reference now to FIG.6A-6C, the logic flow of an exemplary process that may be implemented in the above-described control system (to control the processing sequence of the signatures) is represented with a method 600.

The method begins at the black start circle 601, and then passes to the block 603 when a new job has to be executed. In response thereto, a learning phase of the new job is triggered, which learning phase provides for the execution of a loop for each sample signature corresponding to a signature to be learnt in the expected sequence of the new job. The loop begins at the block 606, wherein an image representing the sample signature is acquired. Passing to the block 609, a bar code is searched in the search area of the image of the sample signature. For this purpose, a generic search line is drawn in its search area (for example, starting from the position of a longitudinal axis thereof). The search line is modified continually (for example, by translating it at steps of ±0.1-0.5mm and rotating it at steps of ±0.5-1°) so as to cover the whole search area. Each current version of the search line is scanned both from left to right and from right to left; during this operation, there is verified whether one of the two directions of the search line includes a sequence of white pixels (i.e., with pixel values very high - such as higher than 235-245) and black pixels (i.e., with pixel values very low - such as lower than 10-20) corresponding to a strip of a bar code (i.e., representing the initial symbol, the final symbol, the expected number of symbols between the initial symbol and the final symbol, and the corresponding correct control value according to the respective coding). If the search line does not intercept any valid bar code (test block 612), the method returns to the block 609 for repeating the same operations in a new position of the search line (being translated and/or rotated with respect to the preceding one). As soon as the bar code has been found, the flow of activity descends from the block 612 to the block 615 (with an error condition that is reached if the bar code is not found within a predefined time-out - for example, 10-30ms). In such phase, the code so read (together with its direction - i.e., from left to right or from right to left) is associated with the signature to be learnt.

Continuing to the block 618, the search line that intercepts the bar code is translated upwards at predefined steps (for example, 0.1-0.5 mm). A test is performed at the block 621 to verify whether the search line still intercepts the bar code (by repeating the same operations as above). In the positive case, the method returns to the block 618 for translating the search line again. As soon as the search line exits the bar code, instead, the flow of activity descends from the block 621 to the block 624. In such phase, the position of the bar code is defined by means of the reference consisting of the half-line that extends along the preceding search line from an origin corresponding to the beginning of the bar code thereon; for example, the reference is represented by the coordinates (in the image of the sample signature) of an origin of this half-line and of an intersection point thereof with the border of the search area.

With reference to the block 627, four eligible frames are then extracted from the image of the sample signature at corresponding offsets from the position of the bar code (begin defined by the corresponding reference); for example, the eligible frames may be staggered to each other starting from a left upper corner of a printing area of the sample signature (within its blank margin). All the eligible frames have a same predefined size (for example, equal to 5-40mm x 5-40mm, and preferably equal to 10-30mm x 10-30mm - for example, equal to 20mm x 20mm).

Continuing to the block 630, for each eligible frame there is calculated the number of transitions from white pixels to black pixels, and *vice-versa.* For this purpose, the eligible frame is scanned along each pixel row thereof from the top to the bottom, by moving alternatively along each row from left to right and from right to left. For each pixel, the difference between its value and the value of a next pixel along the above-defined sequence is calculated. If such difference exceeds a threshold in absolute value (for example, 450-600), the number of transitions is increased by one unit. Therefore, at the end of the scanning of the eligible frame, the number of transitions will be equal to the one of the adjacent pixels being significantly different. The eligible frame having the higher number of transitions is selected at block 633. Consequently, a representation of the selected eligible frame is assigned to the signature to be learned at the block 636; for example, for this purpose it is possible to calculate a reference pattern of the eligible frame, as described in document EP-A-1715441 (the entire disclosure of which is herein incorporated by reference). Passing to the block 638, the offset of the selected eligible frame is likewise assigned to the sample signature.

A test is performed at the block 639 to determine whether a last sample signature has been processed (for example, according to a configuration parameter being set manually to define the number of signatures of the expected sequence). In the negative case, the method returns to the block 606 for repeating the same operations on a new sample signature.

On the contrary, the learning phase is terminated, and the flow of activity passes from the block 642 to the block 639 as soon as the execution of the new job has begun (either manually or automatically). The execution of the job provides for a loop that it is performed continually for each current signature to be processed. The loop begins at the block 645, wherein an image representing the current signature is acquired. Passing to the block 648, a bar code is searched in the search area of the image of the current signature; for this purpose, a current version of a search line (being modified continually) is scanned in the direction associated with the corresponding expected signature (i.e., from left to right or from right to left) verifying whether it intercepts a bar code. The method branches at the block 651 according to the outcome of the verification. If a valid code has been read the block 654 is executed, whereas otherwise the blocks 657-669 are executed; in both cases, the method merges again at the block 672.

Considering in particular the block 654 (valid code being read), the code so read is assigned to the current signature. The execution branch ends at the block 672 directly.

With reference instead to the block 657 (valid code being not read), a test is performed to verify whether a corrupted bar code has been found along the search line. Such condition is satisfied if the scanning of the search line has read a non-valid code (i.e., being not complete and/or with a wrong control value), which is however represented by at least the initial symbol being immediately followed by a minimum number of symbols (for example, 1-2) in the direction associated with the corresponding expected signature; this allows limiting the analysis to corrupted bar codes being however significant to define their position. In the affirmative case, the new corrupted bar code being just found is compared at the block 660 with a possible preceding corrupted bar code - whose identification information (i.e., read symbols and position) is stored in a dedicated variable. The comparison between the (new and preceding) corrupted bar codes is performed according to a predefined relevance criterion. For example, the relevance criterion is defined in decreasing order of relevance (in addition to the presence of the initial symbol being always true for what has been indicated above), by the presence of the final symbol in a position being compliant with the expected number of symbols of the bar code, and then by the number of intermediate symbols being present immediately after the initial symbol. In this way, a corrupted bar code with both the initial symbol and the final symbol will always be considered more relevant than a corrupted bar code with only the initial symbol; for the same conditions, there will then be preferred the corrupted bar code with the higher number of intermediate symbols.

If the new corrupted bar code is more significant than the preceding corrupted bar code (test block 663), the preceding corrupted bar code is replaced by the new corrupted bar code at the block 666. For this purpose, the search line is used to define the position of the corrupted bar code, by means of the corresponding reference consisting of the half-line extending along the search line from an origin corresponding to the beginning of the bar code thereon (being defined as mentioned above). The symbols being read in the new corrupted bar code and its reference are stored into the dedicated variable (by replacing the preceding values). The flow of activity then passes to the block 669; the same point is also reached directly from the block 663 (if the new corrupted bar code is not more significant than the preceding corrupted bar code), or from the block 657 (if no bar code, even corrupted, has been found). At this point, a test is performed to verify whether the time-out for the search of the bar code (for example, 10-30ms) has expired. In the negative case, the method returns to the block 648 for repeating the same operations in a new position of the search line (being translated and/or rotated with respect to the preceding one). On the contrary, the execution branch ends at the block 672.

With reference now to the block 672, the method branches again according to the outcome of the search. If a valid code has been read the blocks 675-678 are executed, if a corrupted bar code has been found the blocks 681-690 are executed, whereas if no bar code has been found the block 693 is executed; in any case, the method merges again at the block 696.

Considering in particular the block 675 (valid code), the code being read on the current signature is compared with the code of the expected signature. If the two codes are different (so that the current signature does not correspond to the expected signature), an error condition is reached at the block 678 (with the sewing machine that is stopped). The execution branch then ends at the block 696; the same point is instead reached directly from the block 675 if the two codes are equal (i.e., the current signature corresponds to the expected signature).

With reference instead to the block 681 (corrupted bar code), the offset of the expected signature is extracted from the corresponding table. Passing to the block 684, a frame having the same (predefined) size of the frame of the expected signature is extracted from the image of the current signature at this offset from its bar code. The frame of the current signature and the frame of the expected signature are re-aligned at the block 687. This result is achieved with a panning operation (for example, as described in the above-mentioned document EP-A-1715441), which is executed by moving the frames between them at predefined steps - for example, 0.5-1 pixel; the panning operation only involves translations being perpendicular to an expected direction of the bar codes (i.e., vertically) - without horizontal translations and rotations - within a very small range being defined by the identification tolerance of the position of the bar codes (for example, ±0.1-0.5 mm). At this point, the frame of the current signature (possibly re-aligned) is compared more accurately with the frame of the expected signature at block 689 (for example, again as described in the document EP-A-1715441). If the two frames do not match (so that the current signature does not correspond to the expected signature), an error condition is reached at the block 690 (with the sewing machine that is stopped). The execution branch then ends at the block 696; the same point is instead reached directly from the block 687 if the frame of the current signature matches the frame of the expected signature (so that the current signature corresponds to the expected signature).

Passing at the end to the block 693 (bar code not found), an error condition is reached directly since the current signature does not correspond to the expected signature (with the sewing machine that is stopped). The execution branch then ends at the block 696.

In any case, a test is performed at the block 696 to determine whether the job has terminated (for example, when all the signatures in the hopper have been processed or a corresponding command has been input manually). In the negative case, the method returns to the block 645 for repeating the same operations on a new current signature. On the contrary, the method ends at the concentric white/black stop circles 699.

Naturally, in order to satisfy local and specific requirements, a person skilled in the art may apply to the solution described above many logical and/or physical modifications and alterations. More specifically, although this solution has been described with a certain degree of particularity with reference to preferred embodiments thereof, it should be understood that various omissions, substitutions and changes in the form and details as well as other embodiments are possible. Particularly, the same solution may even be practiced without the specific details (such as the numerical examples) set forth in the preceding description to provide a more thorough understanding thereof; conversely, well-known features may have been omitted or simplified in order not to obscure the description with unnecessary particulars. Moreover, it is expressly intended that specific elements and/or method steps described in connection with any embodiment of the disclosed solution may be incorporated in any other embodiment as a matter of general design choice.

Particularly, the proposed solution lends itself to be implemented with an equivalent method (by using similar steps, removing some steps being non-essential, or adding further optional steps); moreover, the steps may be performed in a different order, concurrently or in an interleaved way (at least in part).

Similar considerations apply if the same technique is applied in a punching machine, in a gathering machine, in a case-in machine, or in another bookbinding machine (in order to recognize corresponding bookbinding articles such as sheets, blocks of signatures, covers, and the like). More generally, the same solution may find application in any other field that requires the recognition of generic articles to be processed (for example, boxes in a packaging system, goods in a warehouse, products in a shopping centre of the self-service type, and so on).

Generally, the recognition of each current article to be processed is performed by comparing it with a corresponding article of an expected set; such expected set may consist of any number of articles (down to a single one when the articles to be processed are all equal to each other, such as in every hopper of a gathering machine).

Although in the preceding description explicit reference has been made to a specific coding being based on the bar codes, this does not have to be interpreted in a restrictive way. For example, the codes may be defined according to any other standard and represented in any other way (for example, with bi-dimensional bar codes being based on dot structures); moreover, the representations of these codes may be printed (or made in any in other way) in different positions on the signatures.

It is expressly intended that the frames refer to any image portion (whose position is referred to the bar codes); for example, the frame may have other size (up to the whole working area of the signatures) and/or shape (squared, rectangular, polygonal) - even changing individually for each signature of the expected sequence.

Likewise, the digital images may be acquired with other devices (for example, of the CMOS-type), and they may be represented with matrices of pixels with different size and/or resolution; moreover, the pixels may be represented with any other values - for example, in colours by means of corresponding red, green and blue (RBG) components.

Similar considerations apply to any other searching technique of the bar codes in the images. Obviously, whatever suitable algorithm may be used to compare the frames.

Alternatively, the expected sequence may be defined in another way (for example, by considering more sequences of sample signatures); in any case, nothing prevents supplying the definition of the expected sequence to the sewing machine directly (for example, by loading it into the control system from an external storage device).

In a different embodiment of the present invention, the position of the bar code on each signature may be defined in different way (for example, by means of an axis thereof and of an initial or final position thereof along such axis). Moreover, in the case of the sample signatures the position of the bar code may be determined with other algorithms (for example, of the dichotomic-type until its upper or lower longitudinal edge is reached exactly).

The number of eligible frames used above is merely illustrative, as well as the respective offsets; moreover, it is also possible to determine the positions and/or the sizes of the eligible frames dynamically according to the sample signatures (for example, by increasing them as their informative content decreases). In any case, nothing prevents using frames being all of the same size and all at the same offset for the different sample signatures.

Alternatives technique may be used to select the eligible frame of each sample signature to be assigned to the corresponding signature to be learnt (for example, being based on statistical parameters of the distribution of the pixel values - such as their average, variance, and the like).

Similar considerations apply if the position of the corrupted bar codes is determined in another way (also independently of the searching procedure of the bar code in the image of each current signature).

The definition provided above of the corrupted bar codes (which are used to apply the proposed solution) is merely indicative; for example, in alternative implementations there may be taken into account only bar codes including a significantly high number of symbols in any position (for example, at least 50%), or on the contrary bar codes including at least one symbol of any type.

Moreover, it is possible to use different relevance criteria to compare the non-valid codes during the search of the bar code on each current signature (for example, simply based on the number of read symbols). In any case, nothing prevents defining the position of the corrupted bar code in another way (for example, as an average of the positions being defined by all the search lines that intercept the corrupted bar code, possibly weighed according to their relevance); moreover, the possibility of however defining this position more accurately (for example, by moving up to the upper edge of the bar code) is not excluded.

Although the proposed solution advantageously allows limiting the re-alignment of the frames only to the translation in vertical, this does not exclude the possibility to add a translation in horizontal and/or a small rotation (for example, by ±1°) as well, in order to compensate the non-perfect determination of the references that define the positions of the bar codes. In any case, an implementation without any re-alignment operation is contemplated.

The proposed solution may be implemented as a stand-alone module, as a plug-in for a control program already installed, or even directly in the control program itself. Similar considerations apply if the program (which may be used to implement each embodiment of the invention) is structured in a different way, or if additional modules or functions are provided; likewise, the memory structures may be of other types, or may be replaced with equivalent entities (not necessarily consisting of physical storage media). In any case, the program may take any form suitable to be used by any data processing system or in connection therewith (for example, within a virtual machine); particularly, the program may be in the form of external or resident software, firmware, or microcode (either in object code or in source code - for example, to be compiled or interpreted). Moreover, it is possible to provide the program on any computer-usable medium. For example, the medium may be of the electronic, magnetic, optical, electromagnetic, infrared, or semiconductor type; examples of such medium are fixed disks (where the program can be pre-loaded), removable disks, tapes, cards, wires, fibres, wireless connections, networks, broadcast waves, and the like. In any case, the solution according to an embodiment of the present invention lends itself to be implemented even with a hardware structure (for example, integrated in a chip of semiconductor material), or with a combination of software and hardware.

Similar considerations apply if the same solution is implemented in any other control system (or equivalent device); in any case, nothing prevents providing a distinct computer that controls one or more sewing machines (or machines of other type). It should be noted that the control system lends itself to be produced and put on the marked even as a stand-alone product, in order to be used in pre-existing machines.

Naturally, the sewing machine (or any other machine wherein the proposed solution can be used) may have a different structure or include equivalent components.

## Claims

1. A method (600) for recognising articles to be processed, the method including the steps of:
storing (603-639) an indication of an expected set of repetitive processing of the articles, each article of the expected set being defined by a code compliant with a predefined coding, an offset from a representation of the code on the article, and a representation of a frame of predefined size representing a portion of the article at said offset from the representation of the code,
repeating (642-696) for each current article to be processed corresponding to an expected article of the expected set being defined by an expected code, an expected offset, and an expected frame:
acquiring (645) a current image representing at least part of the current article,
searching (648-669) the representation of a current code being compliant with the coding in the current image, a position in the current image of the representation of a corrupted code partially compliant with the coding being determined in response to a negative result of the search of the current code,
extracting (681-684) a current frame of said size from the current image at the expected offset from the position of the representation of the corrupted code,
comparing (687-689) the current frame with the expected frame, and
determining (690) a correctness of the article according to the comparison of the current frame with the expected frame.

2. The method (600) according to claim 1, wherein the step of storing (603-639) an indication of an expected set includes repeating (603-639) for each sample article corresponding to an article to be learnt of the expected set:
acquiring (606) a sample image representing at least part of the sample article,
searching (609-612) the representation of a sample code compliant with the coding in the sample image,
setting (615) the code of the article to be learnt equal to the sample code,
determining (618-624) a position in the sample image of the representation of the sample code,
extracting (627-633) a sample frame of said size from the sample image at a sample offset from the position of the representation of the sample code,
setting (636) the frame of the article to be learnt equal to the sample frame, and
setting (638) the offset of the article to be learnt equal to the sample offset.

3. The method (600) according to claim 2, wherein the step of searching (609-612) the representation of a sample code includes:
scanning (609) the sample image along different search lines until finding the representation of the sample code,
and wherein the step of determining (618-624) a position in the sample image of the representation of the sample code includes:
translating (618-621) the search line corresponding to the sample code inwards the sample image as far as the representation of the sample code remains found, and
defining (624) the position of the representation of the sample code by the translated search line and an end of the representation of the sample code along the translated search line.

4. The method (600) according to claim 2 or 3, wherein the step of extracting (627-633) a sample frame includes:
extracting (627) a plurality of eligible frames from the sample image at different offsets from the position of the representation of the sample code, and
selecting (630-633) one of the eligible frames according to a predefined selection criterion, the sample frame being set equal to the selected eligible frame and the sample offset being set equal to the offset of the selected eligible frame.

5. The method (600) according to claim 4, wherein the step of selecting (630-633) one of the eligible frames includes:
selecting (630-633) the eligible frame having maximum information content.

6. The method (600) according to claim 5, wherein each eligible frame includes a matrix of values, the step of selecting (630-633) the eligible frame having maximum information content including:
calculating (630) a number of transitions in each eligible frame, each transition being detected in response to a difference between adjacent values of the eligible frame being higher than a threshold, and
selecting (633) the eligible frame having the highest number of transitions.

7. The method (600) according to any claim from 1 to 6, wherein the step of searching (648-669) the representation of a current code includes:
scanning (648) the current image along different further search lines until finding the representation of the current code or the expiration of a time-out,
verifying (657) whether each further search line intercepts the representation of a new corrupted code,
comparing (660) the new corrupted code with the corrupted code according to a predefined relevance criterion in response to the interception of the representation of the new code, and
replacing (666) the corrupted code with the new corrupted code if the new code is more relevant than the corrupted code according to the relevance criterion.

8. The method (600) according to claim 7, wherein the step of verifying (657) whether each further search line intercepts the representation of a new corrupted code includes:
detecting (657) the representation of the new corrupted code in response to the finding of the representation of a code being incomplete and/or with a wrong checksum including a starting sequence of symbols compliant with the coding in a minimum number.

9. The method (600) according to claim 7 or 8, wherein the relevance criterion is defined in decreasing order of relevance by the presence of a start symbol, a stop symbol, and a higher number of intermediate symbols immediately following the start symbol being compliant with the coding.

10. The method (600) according to any claim from 1 to 9, wherein the step of comparing (687-689) the current frame with the expected frame includes:
re-aligning (687) the current frame with the expected frame, the re-alignment being only based on a translation of the current frame transversally to the representation of the corrupted code in the current image.

11. A computer program (500) including code means for causing a data processing system (115) to perform the steps of the method (600) according to any claim from 1 to 10 when the computer program is executed on the system.

12. A control system (115) for recognising articles to be processed (105), the control system including means (500) for implementing the steps of the method (600) according to any claim from 1 to 10.

13. A machine (100) for processing articles (105), the machine including the control system (115) of claim 12.

14. The machine (100) according to claim 13, wherein the machine is a bookbinding machine and the articles (105) are signatures.

15. The machine (100) according to claim 14, wherein the machine is a bookbinding sewing machine, and wherein the expected set of repetitive processing of the articles is an ordered sequence of a plurality of signatures (105) forming a book (150).

## Patentansprüche

1. Verfahren (600) zum Erkennen zu verarbeitender Gegenstände, wobei das Verfahren folgende Schritte aufweist:
Speichern (603-639) einer Kennzeichnung einer erwarteten Reihe sich wiederholender Verarbeitung der Gegenstände, wobei jeder Gegenstand der erwarteten Reihe durch einen einer vordefinierten Kodierung entsprechenden Code, einen Abstand von einer Darstellung des Codes auf dem Gegenstand und eine Darstellung eines Bildausschnittes vordefinierter Größe, der einen Teilbereich des Gegenstandes in diesem Abstand von der Darstellung des Codes darstellt, definiert ist,
Wiederholen (642-696) folgender Schritte für jeden momentanen zu verarbeitenden Gegenstand, der einem erwarteten Gegenstand der erwarteten Reihe folgender Schritte, der durch einen erwarteten Code, einen erwarteten Abstand und einen erwarteten Bildausschnitt definiert ist, folgender Schritte:
Erlangen (645) eines momentanen Bildes, das zumindest einen Teil des momentanen Gegenstandes darstellt,
Suchen (648-669) der Darstellung eines momentanen der Kodierung in dem momentanen Bild entsprechenden Codes, wobei eine Position in dem momentanen Bild der Darstellung eines fehlerhaften Codes, der teilweise der Kodierung entspricht, als Reaktion auf ein negatives Ergebnis der Suche nach dem momentanen Code bestimmt wird,
Extrahieren (681-684) eines momentanen Bildausschnittes besagter Größe aus dem momentanen Bild in dem erwarteten Abstand von der Position der Darstellung des fehlerhaften Codes,
Vergleichen (687-689) des momentanen Bildausschnittes mit dem erwarteten Bildausschnitt und
Bestimmen (690) einer Richtigkeit des Gegenstandes gemäß dem Vergleich des momentanen Bildausschnittes mit dem erwarteten Bildausschnitt.

2. Verfahren (600) nach Anspruch 1, wobei der Schritt des Speicherns (603-639) einer Kennzeichnung einer erwarteten Reihe für jeden Mustergegenstand, der einem zu lernenden Gegenstand der erwarteten Reihe entspricht, das Wiederholen (603-639) folgender Schritte aufweist:
Erlangen (606) eines Musterbildes, das wenigstens einen Teil des Mustergegenstandes darstellt,
Suchen (609-612) der Darstellung eines der Kodierung entsprechenden Mustercodes in dem Musterbild,
Einstellen (615) des Codes des zu lernenden Gegenstandes gleich dem Mustercode,
Bestimmen (618-624) einer Position in dem Musterbild der Darstellung des Mustercodes,
Extrahieren (627-633) eines Musterbildausschnittes besagter Größe aus dem Musterbild in einem Musterabstand von der Position der Darstellung des Mustercodes,
Einstellen (636) des Bildausschnittes des zu lernenden Gegenstandes gleich dem Musterbildausschnitt,
und
Einstellen (638) des Abstandes des zu lernenden Gegenstandes gleich dem Musterabstand.

3. Verfahren (600) nach Anspruch 2, wobei der Schritt des Suchens (609-612) der Darstellung eines Mustercodes beinhaltet:
Abtasten (609) des Musterbildes entlang verschiedener Suchlinien bis zum Finden der Darstellung des Mustercodes,
und wobei der Schritt des Bestimmens (618-624) einer Position in dem Musterbild der Darstellung des Mustercodes aufweist:
Verschieben (618-621) der dem Mustercode entsprechenden Suchlinie in das Musterbild hinein, soweit die Darstellung des Mustercodes gefunden bleibt, und
Bestimmen (624) der Position der Darstellung des Mustercodes durch die verschobene Suchlinie und eines Endes der Darstellung des Mustercodes entlang der verschobenen Suchlinie.

4. Verfahren (600) nach Anspruch 2 oder 3, wobei der Schritt des Extrahierens (627-633) eines Musterbildausschnittes beinhaltet:
Extrahieren (627) einer Mehrzahl geeigneter Bildausschnitte aus dem Musterbild in verschiedenen Abständen von der Position der Darstellung des Mustercodes, und
Auswählen (630-633) eines der geeigneten Bildausschnitte gemäß einem vordefinierten Auswahlkriterium, wobei der Musterbildausschnitt gleich dem ausgewählten geeigneten Bildausschnitt eingestellt wird und der Musterabstand gleich dem Abstand des ausgewählten geeigneten Bildausschnittes eingestellt wird.

5. Verfahren (600) nach Anspruch 4, wobei der Schritt des Auswählens (630-633) eines der geeigneten Bildausschnitte beinhaltet:
Auswählen (630-633) des geeigneten Bildausschnittes, der einen maximalen Informationsinhalt hat.

6. Verfahren (600) nach Anspruch 5, wobei jeder geeignete Bildausschnitt eine Wertematrix aufweist und der Schritt des Auswählens (630-633) des geeigneten Bildausschnittes mit einem maximalen Informationsinhalt beinhaltet:
Berechnen (630) einer Anzahl von Übergängen in jedem geeigneten Bildausschnitt, wobei jeder Übergang als Reaktion darauf detektiert wird, dass ein Unterschied zwischen benachbarten Werten des geeigneten Bildausschnittes größer als ein Schwellenwert ist, und
Auswählen (633) des geeigneten Bildausschnittes mit der höchsten Anzahl von Übergängen.

7. Verfahren (600) nach einem der Ansprüche 1 bis 6, wobei der Schritt des Suchens (648-669) der Darstellung eines momentanen Codes beinhaltet:
Abtasten (648) des momentanen Bildes entlang verschiedener weiterer Suchlinien bis zu dem Finden der Darstellung des momentanen Codes oder dem Ablaufen eines Zeitlimits,
Überprüfen (657), ob jede weitere Suchlinie auf die Darstellung eines neuen fehlerhaften Codes trifft,
Vergleichen (660) des neuen fehlerhaften Codes mit dem fehlerhaften Code gemäß einem vordefinierten Relevanzkriterium als Reaktion auf das Auftreffen auf die Darstellung des neuen Codes, und
Ersetzen (666) des fehlerhaften Codes durch den neuen fehlerhaften Code, wenn der neue Code gemäß dem Relevanzkriterium relevanter als der fehlerhafte Code ist.

8. Verfahren (600) nach Anspruch 7, wobei der Schritt des Überprüfens (657), ob jede weitere Suchlinie auf die Darstellung eines neuen fehlerhaften Codes trifft, beinhaltet:
Detektieren (657) der Darstellung des neuen fehlerhaften Codes als Reaktion darauf, dass festgelegt wird, dass die Darstellung eines Codes unvollständig ist und/oder eine falsche Prüfsumme hat, aufweisend eine Startfolge von Symbolen, die der Kodierung in einer minimalen Anzahl entspricht.

9. Verfahren (600) nach Anspruch 7 oder 8, wobei das Relevanzkriterium in absteigender Relevanzordnung durch das Vorhandensein eines Startsymbols, eines Endsymbols und einer größeren Anzahl von dem Startsymbol unmittelbar folgenden Zwischensymbolen, die der Kodierung entsprechen, definiert ist.

10. Verfahren (600) nach einem der Ansprüche 1 bis 9, wobei der Schritt des Vergleichens (687-689) des momentanen Bildausschnittes mit dem erwarteten Bildausschnitt beinhaltet:
Neuausrichten (687) des momentanen Bildausschnittes mit dem erwarteten Bildausschnitt, wobei die Neuausrichtung nur auf einer Verschiebung des momentanen Bildausschnittes transversal zu der Darstellung des fehlerhaften Codes in dem momentanen Bild basiert.

11. Computerprogramm (500), das eine Codeeinrichtung zum Bewirken, dass ein Datenverarbeitungssystem (115) die Schritte des Verfahrens (600) nach einem der Ansprüche 1 bis 10 ausführt, wenn das Computerprogramm auf dem System ausgeführt wird, aufweist.

12. Steuersystem (115) zum Erkennen zu verarbeitender Gegenstände (105), wobei das Steuersystem eine Einrichtung (500) zum Implementieren der Schritte des Verfahrens (600) nach einem der Ansprüche 1 bis 10 aufweist.

13. Maschine (100) zum Verarbeiten von Gegenständen (105), wobei die Maschine das Steuersystem (115) nach Anspruch 12 aufweist.

14. Maschine (100) nach Anspruch 13, wobei die Maschine eine Buchbindemaschine ist und die Gegenstände (105) Druckbögen sind.

15. Maschine (100) nach Anspruch 14, wobei die Maschine eine Buchbindeheftmaschine ist und wobei die erwartete Reihe sich wiederholender Verarbeitung der Gegenstände eine geordnete Folge einer Mehrzahl von Druckbögen (105) ist, die ein Buch (150) bilden.

## Revendications

1. Procédé (600) pour reconnaître des articles à traiter, le procédé comprenant les étapes suivantes :
mémoriser (603-639) une indication d'un ensemble attendu d'articles à traitement répétitif, chaque article de l'ensemble attendu étant défini par un code conforme à un codage prédéfini, un décalage par rapport à une représentation du code sur l'article, et une représentation d'une trame de taille prédéfinie représentant une portion de l'article au niveau du décalage par rapport à la représentation du code,
répéter (642, 696) pour chaque article courant à traiter correspondant à un article attendu de l'ensemble attendu qui est défini par un code attendu, un décalage attendu et une trame attendue :
acquérir (645) une image courante représentant au moins une partie de l'article courant,
rechercher (648-669) la représentation d'un code courant qui est conforme au codage dans l'image courante, une position dans l'image courante de la représentation d'un code endommagé partiellement conforme au codage étant déterminée en réponse à un résultat négatif de la recherche du code courant,
extraire (681-684) une trame courante ayant ladite taille à partir de l'image courante au niveau du décalage attendu par rapport à la position de la représentation du code endommagé,
comparer (687-689) la trame courante à la trame attendue, et
déterminer (690) si l'article est correct en fonction de la comparaison de la trame courante à la trame attendue.

2. Procédé (600) selon la revendication 1, dans lequel l'étape consistant à mémoriser (603-639) une indication d'un ensemble attendu comprend la répétition (603-639), pour chaque article échantillon correspondant à un article à apprendre de l'ensemble attendu :
acquérir (606) une image échantillon représentant au moins une partie de l'article échantillon,
rechercher (609-612) la représentation d'un code échantillon conforme au codage dans l'image échantillon,
mettre (615) le code de l'article à apprendre égal au code échantillon,
déterminer (618-624) une position dans l'image échantillon de la représentation du code échantillon,
extraire (627-633) une trame échantillon ayant ladite taille de l'image échantillon au niveau d'un décalage échantillon par rapport à la position de la représentation du code échantillon,
mettre (636) la trame de l'article à apprendre égale à la trame échantillon, et
mettre (638) le décalage de l'article à apprendre égal au décalage échantillon.

3. Procédé (600) selon la revendication 2, dans lequel l'étape consistant à rechercher (609-612) la représentation d'un code échantillon comprend :
analyser (609) l'image échantillon suivant différentes lignes de recherche jusqu'à trouver la représentation du code échantillon,
et dans lequel l'étape consistant à déterminer (618-124) une position dans l'image échantillon de la représentation du code échantillon comprend :
translater (618-621) la ligne de recherche correspondant au code échantillon vers l'intérieur de l'image échantillon aussi loin que la représentation du code échantillon reste trouvée, et
définir (624) la position de la représentation du code échantillon par la ligne de recherche translatée et une extrémité de la représentation du code échantillon suivant la ligne de recherche translatée.

4. Procédé (600) selon la revendication 2 ou 3, dans lequel l'étape consistant à extraire une trame échantillon (627-633) comprend :
extraire (627) une pluralité de trames éligibles à partir de l'image échantillon à des décalages différents par rapport à la position de la représentation du code échantillon, et
sélectionner (630-633) l'une des trames éligibles selon un critère de sélection prédéfini, la trame échantillon étant mise égale à la trame éligible sélectionnée et le décalage échantillon étant mis égal au décalage de la trame éligible sélectionnée.

5. Procédé (600) selon la revendication 4, dans lequel l'étape consistant à sélectionner (630-633) l'une des trames éligibles comprend :
sélectionner (630-633) la trame éligible ayant le contenu d'informations maximum.

6. Procédé (600) selon la revendication 5, dans lequel chaque trame éligible comprend une matrice de valeurs, l'étape consistant à sélectionner (630-633) la trame éligible ayant le contenu d'informations maximum comprenant :
calculer (630) un nombre de transitions dans chaque trame éligible, chaque transition étant détectée par le fait que la différence entre des valeurs adjacentes est supérieure à un seuil, et
sélectionner (633) la trame éligible ayant le nombre de transitions le plus élevé.

7. Procédé (600) selon l'une quelconque des revendications 1 à 6, dans lequel l'étape consistant à rechercher (648-669) la représentation d'un code courant comprend :
analyser (648) l'image courante suivant d'autres lignes de recherche différentes jusqu'à trouver la représentation du code courant ou jusqu'à l'expiration d'un délai d'attente,
vérifier (657) si chaque autre ligne de recherche intercepte la représentation d'un nouveau code endommagé,
comparer (660) le nouveau code endommagé au code endommagé selon un critère de pertinence prédéfini en réponse à l'interception de la représentation du nouveau code, et
remplacer (666) le code endommagé par le nouveau code endommagé si le nouveau code est plus pertinent que le code endommagé selon le critère de pertinence.

8. Procédé (600) selon la revendication 7, dans lequel l'étape consistant à vérifier (657) si chaque autre ligne de recherche intercepte la représentation d'un nouveau code endommagé comprend :
détecter (657) la représentation du nouveau code endommagé en réponse au fait de trouver que la représentation d'un code est incomplète et/ou comporte une somme de vérification erronée comprenant une séquence de départ de symboles conformes au codage dans un nombre minimum.

9. Procédé (600) selon la revendication 7 ou 8, dans lequel le critère de pertinence est défini par ordre de pertinence décroissant par la présence d'un symbole de départ, d'un symbole d'arrêt, et d'un nombre supérieur de symboles intermédiaires suivant immédiatement le symbole de départ qui sont conformes au codage.

10. Procédé (600) selon l'une quelconque des revendications 1 à 9, dans lequel l'étape consistant à comparer (687-689) la trame courante à la trame attendue comprend :
réaligner (687) la trame courante avec la trame attendue, le réalignement étant basé seulement sur une translation de la trame courante de façon transversale vers la représentation du code endommagé dans l'image courante.

11. Programme informatique (500) comprenant des moyens de code pour amener un système de traitement de données (115) à réaliser les étapes du procédé (600) selon l'une quelconque des revendications 1 à 10, lorsque le programme informatique est exécuté sur le système.

12. Système de commande (115) pour reconnaître des articles à traiter (105), le système de commande comprenant des moyens (500) pour mettre en oeuvre les étapes du procédé (600) selon l'une quelconque des revendications 1 à 10.

13. Machine (100) pour traiter des articles (105), la machine comprenant le système de commande (115) de la revendication 12.

14. Machine (100) selon la revendication 13, la machine étant une machine à relier et les articles (105) étant des signatures.

15. Machine (100) selon la revendication 14, la machine étant une machine à coudre pour reliure, et l'ensemble attendu d'articles à traitement répétitif étant une séquence ordonnée d'une pluralité de signatures (105) formant un livre (150).
